# EUROPÄISCHE PATENTANMELDUNG

(11) **EP 0 705 940 A2**
(43) Veröffentlichungstag der Anmeldung: **10.04.1996**
(21) Anmeldenummer: 95115604.1
(22) Anmeldetag: 04.10.1995
(51) Int. Cl.: E01C 13/06

(54) **Mehrschichtiger Bodenbelag, insbesondere Fallschutzbelag**

(30) Priorität: 05.10.1994 DE 4435588
(71) Anmelder: Bermüller, Rudolf, D-90475 Nürnberg (DE)
(72) Erfinder: Bermüller, Rudolf, D-90475 Nürnberg (DE)
(74) Vertreter: Matschkur, Götz, Lindner Patent- und Rechtsanwälte

(57) **Zusammenfassung**

Mehrschichtiger Bodenbelag, in Sandwichbauweise für Sport- und Spielplätze, wobei die obere Schicht (2) eine klebergebundene Schicht aus granularem und/oder feinkörnigem Natur- und/oder Synthesekautschuk (4) und die untere Schicht (3) eine geschäumte Polymerschicht ist, die durch eine mechanische Verzahnung zwischen dem nach dem Verbinden der Schichten (2,3) ausgehärteten Kleber und der Oberflächenstruktur der geschäumten Polymerschicht miteinander verbunden sind, sowie Verfahren zur Herstellung dieses Bodenbelags.

## Beschreibung

Die Erfindung betrifft einen mehrschichtigen Bodenbelag, insbesondere Fallschutzbelag, in Sandwich-Bauweise für Sport- und Spielplätze.

Mehrschichtige, insbesondere zweischichtige Bodenbeläge, die aufgrund ihrer Elastizität auch als Fallschutzbeläge für entsprechende Einrichtungen dienen, sind bereits hinreichend bekannt. Die obere Schicht ist in der Regel für die elastischen Eigenschaften des Bodenbelages verantwortlich, die untere Schicht hingegen bestimmt die Dämpfungswirkung des Belages. Für die einzelnen Schichten können je nach Anwendungsfall unterschiedliche Materialien gewählt werden, so daß sich die Eigenschaften des Bodenbelages der jeweiligen Verwendung anpassen lassen. Sowohl die unterschiedlichen Schichtmaterialien als auch die Tatsache, daß die Schichten in der Regel als bereits vorgefertigte Lagen miteinander verbunden werden, erfordern jedoch eine sehr aufwendige Verbindungstechnik, um die beiden Schichten derart fest miteinander zu verbinden, daß auch bei erhöhter mechanischer Beanspruchung diese fest und unlösbar miteinander vereinigt sind. Diese Verbindungstechniken reichen vom äußerst aufwendigen Vernadeln mit mehreren Millionen Einstichen/m² über die Verwendung von einzusetzenden Hakenelementen bis hin zum Einsatz aufwendiger Verbindungsverfahren wie beispielsweise dem Flammverschweißen. Neben der Tatsache, daß diese Verbindungstechniken äußerst aufwendig und im Hinblick auf die Herstellungskosten nachteilig sind, ist die zusätzliche Durchführung des Verbindungsverfahrens auch für den Durchsatz nachteilig, da der Bodenbelag stets zusätzlich zu behandeln ist.

Der Erfindung liegt somit die Aufgabe zugrunde, einen Bodenbelag zu schaffen, der äußerst einfach in seiner Herstellung ist und insbesondere bei Verwendung von aufgrund ihrer chemischen/physikalischen Eigenschaften nicht oder nur sehr schwer verbindbaren Schichtmaterialien ohne Verwendung spezieller separater Verbindungstechniken herstellbar ist.

Zur Lösung dieser Aufgabe ist bei einem mehrschichtigen Bodenbelag der eingangs genannten Art erfindungsgemäß vorgesehen, daß die obere Schicht eine klebergebundene Schicht aus granularem und/oder feinkörnigem Natur- und/oder Synthesekautschuk und die untere Schicht eine geschäumte Polymerschicht ist, die durch eine mechanische Verzahnung zwischen dem nach dem Verbinden der Schichten ausgehärteten Kleber und der Oberflächenstruktur der geschäumten Polymerschicht miteinander verbunden sind.

Die innige Verbindung der beiden Schichten, die für eine ausreichende Haftung auch bei hoher mechanischer Beanspruchung sorgt, wird auch durch die mechanische Verzahnung zwischen dem ausgehärteten Kleber und der Oberfläche der geschäumten Polymerschicht, die als Schaumgebilde an ihrer Oberseite strukturiert ist, bewirkt. Auf diese Weise können somit einfach und sicher auch Materialkombinationen, die beispielsweise mittels eines Klebers nur sehr schwer oder nicht miteinander verbindbar sind, verbunden werden, so daß auch solche Materialien für Sandwich-Bodenbeläge verwendbar sind, was im Hinblick auf ihre Elastizitäts- und Dämpfungsparameter die Bandbreite der Materialwahl deutlich vergrößert.

Um sowohl die Struktur der Oberseite der Unterschicht als auch ihre Oberfläche zu vergrößern und so eine größere Fläche für die Ausbildung mechanischer Verzahnungsstellen zu schaffen, kann in weiterer Ausgestaltung der Erfindung vorgesehen sein, daß die untere Schicht aus miteinander verbundenen geschäumten Polymerschnitzeln, vorzugsweise in Mattenform, besteht, wobei die Oberseite zur Vergrößerung der Oberfläche erfindungsgemäß auch profiliert sein kann.

Im Hinblick auf die Materialwahl kann erfindungsgemäß das Polymer der unteren Schicht Polyethylen sein, als Kleber für die Oberschicht kann auf Basis der Erfindung Polyurethan verwendet werden. Polyethylen und Polyurethan sind beispielsweise eine derartige Materialkombination, die mit bisher bekannten Klebern oder anderen Produkten kraftschlüssig kaum miteinander verbunden werden können. Basierend auf der zugrundeliegenden Erfindung ist es nunmehr jedoch möglich, auch diese Materialkombination festhaftend miteinander zu verbinden und verarbeiten zu können. Da die Oberschicht erfindungsgemäß den eingebundenen Kautschuk, der ein Recyclingmaterial, insbesondere Altreifenmaterial und/oder ein EPDM-Kautschuk sein kann, enthält, ist es möglich, nunmehr einen Bodenbelag zu schaffen, der sowohl die hervorragenden Elastizitätseigenschaften des polyurethangebundenen Gummigranulats als auch die ausgezeichneten Dämpfungseigenschaften der Polyethylenschaumschnitzelschicht aufweist. Ein weiterer äußerst wichtiger Vorteil dieser Kombination besteht darin, daß die Polyethylen-Unterschicht kaum Wasser aufnimmt und deshalb nicht frostempfindlich ist, was dazu führt, daß auch beispielsweise im Winter der Bodenbelag nicht angegriffen und beschädigt wird. Darüber hinaus zeichnet sich die Unterschicht gleichzeitig durch ihre Eigenschaft als wasserführende Drainageschicht aus, so daß Untergrundwasser ausreichend abgeführt wird ohne der Gefahr des Aufschwemmens des Bodenbelages.

Ferner betrifft die Erfindung ein Verfahren zur Herstellung eines mehrschichtigen Bodenbelages, bei dem eine Mischung aus einem Kleber, vorzugsweise Polyurethan, und einem granularen und/oder feinkörnigen Kauschukmaterial im wenigstens noch zähflüssigen Zustand des Klebers auf eine Schicht aus einem geschäumten Polymer, vorzugsweise Polyethylen, aufgebracht wird, wonach der Kleber unter Erwirkung einer mechanischen Materialverzahnung mit der Oberflächenstruktur der Polymerschicht aushärtet.

Erfindungsgemäß kann als Polymerschicht eine aus miteinander verbundenen geschäumten Schnitzeln bestehende, vorzugsweise oberseitig profilierte Matte verwendet werden. Für die Herstellung hat es sich als besonders zweckmäßig erwiesen, daß die untere Polymerschicht als Matte am Einbauort ausgelegt wird und die obere Schicht erst vor Ort aufgebracht wird, d.h., daß die Mischung der oberen Schicht erst dann aufgebracht wird, wenn die untere Schicht bereits verlegt ist, was sowohl im Hinblick auf das Auslegen als auch die Eigenschaften des Bodenbelages von Vorteil ist, da die mechanische Verzahnung erst im eingebauten Zustand erwirkt wird, so daß eine Beeinträchtigung der Schichtverbindung durch das Verlegen ausgeschlossen ist.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine bereichsweise Schnittansicht des erfindungsgemäßen Bodenbelages,
- Fig. 2: eine Aufsicht auf die mit dem Kleber in Kontakt tretende Oberfläche eines Polymerschnitzels, und
- Fig. 3: eine vergrößerte Ansicht des Bereichs III aus Fig. 1.

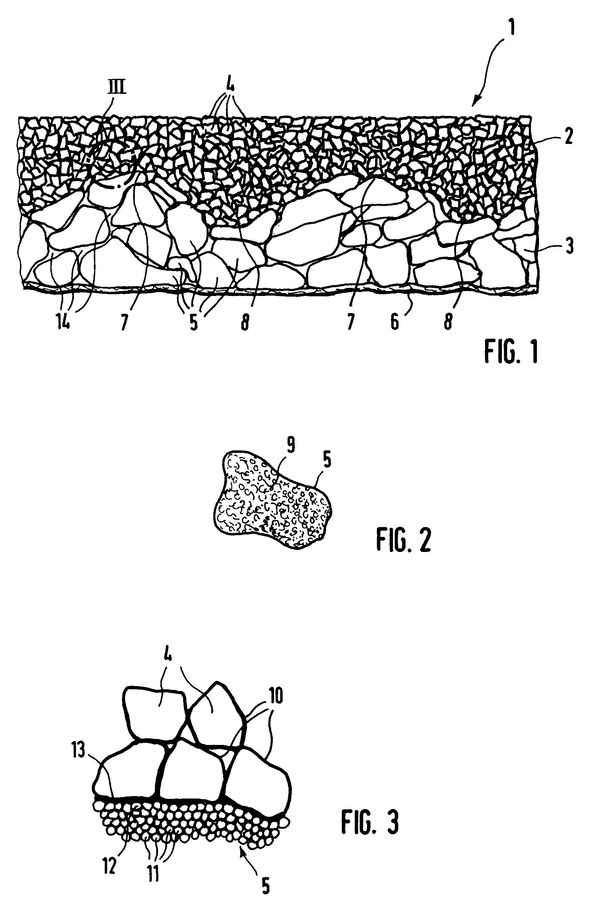

Fig. 1 zeigt einen Bodenbelag 1, bestehend aus einer oberen Schicht 2 und einer unteren Schicht 3. Die feinkörnigere obere Schicht 2 besteht aus granularen Kautschukpartikeln 4, die mittels als Kleber dienendem Polyurethan miteinander verbunden bzw. verklebt sind. Die Herstellung der oberen Schicht erfolgt derart, daß eine zähflüssige Mischung aus den Kautschukpartikeln und dem Polyurethan hergestellt wird, die in noch bearbeitbarem, d.h. quasi vergießbarem Zustand auf die untere Schicht 3 aufgebracht wird. Die untere Schicht 3 selbst besteht aus thermisch miteinander verbundenen Polyethylenschnitzeln 5, die zu einer Mattenform mit unterseitig angeordnetem Auflagevlies 6 verbunden sind. Die der oberen Schicht 2 zugewandte Oberseite der unteren Schicht 3 ist durch entsprechend ausgebildete Erhebungen 7 und Vertiefungen 8 profiliert, was der im folgenden beschriebenen Art der Schichtverbindung zuträglich ist.

Bei den in diesem Ausführungsbeispiel beschriebenen Schichtkomponenten Polyurethan und Polyethylen handelt es sich um Materialien, die selbständig miteinander nicht verbindbar sind und auch nicht mittels eines Klebers verbunden werden können. Die Schichtverbindung des beschriebenen Bodenbelages 1, die für einen ausreichend stabilen und nur schwer lösbaren Schichtverbund sorgt, beruht lediglich auf einer mechanischen Verzahnung des ausgehärteten Polyurethans mit der Oberflächenstruktur der Polyethylenschnitzel. Diese mechanische Verzahnung ist bedingt durch die strukturierte Oberfläche der einzelnen geschäumten Polyethylenschnitzel erreichbar. Die Oberfläche 9 eines derartigen Schnitzels, wie in Fig. 2 dargestellt, ist infolge des Aufschäumens und der Bildung einer Vielzahl von Blasen allseitig strukturiert und mit Erhöhungen und Vertiefungen versehen. Diese Oberflächenstruktur, die abhängig von der Art des Aufschäumens offenzellig oder geschlossenzellig sein kann, ermöglicht einen großflächigen Angriff des bzw. Benetzung mit dem Polyurethankleber unter Erwirkung der mechanischen Verzahnung.

Ein ausschnittsweises Beispiel für die mechanische Verzahnung im Bereich der Grenzfläche der Schichten 2 und 3 ist in Fig. 3 dargestellt. Gezeigt ist ein vergrößerter Schnitt durch den Grenzflächenbereich des Bodenbelags 1 aus Fig. 1. Wie in der Figur zu erkennen ist, weist jeder Kautschukpartikel 4 eine ihn allseitig umgebende Polyurethanschicht 10 auf, die für ein Verkleben und Aneinanderhaften der Kautschukteilchen 4 sorgt. Die Bläschen 11 des nur ausschnittsweise dargestellten Polyethylenschnitzels 5 bilden im Grenzflächenbereich eine mit Erhebungen und entsprechenden Vertiefungen versehene strukturierte Oberfläche 12, in die der beim Aufbringen der oberen Schicht 2 noch flüssige Polyurethankleber 13 eindringt und die entsprechende Struktur quasi verschließt. Nach dem Aushärten des Polyurethans ist dieses derart innig und verzahnt mit der Oberfläche des jeweiligen Polymerschnitzels 5 verbunden, daß eine ausreichende Verbindung der oberen Schicht 2 mit der unteren Schicht 3 gewährleistet ist.

Da die Polyethylenschnitzel in ihrer Form unregelmäßig sind, ist die untere Schicht 3 von einer Vielzahl kleiner und größerer Löcher 14 durchsetzt, die auch im Grenzflächenbereich strukturbildend vorhanden sind. In diese Löcher 14 kann das zähflüssige Polyurethan zusätzlich noch etwas eindringen, so daß sich auch in diesen Bereichen eine Verzahnung nach dem Aushärten ausbildet. Verbessert wird die Haftung der Schichten noch durch die Profilierung der Oberseite der unteren Schicht 3 durch die Erhebungen 7 und Eintiefungen 8, da auf diese Weise die die Verzahnung ermöglichende Grenzfläche zwischen den beiden Schichten noch deutlich erhöht wird. Darüber hinaus sorgt der profilierte Grenzflächenverlauf der Schichten für eine zusätzliche Verschiebesteifigkeit und damit Verbesserung der Schichthaftung bei schräg auf die obere Schicht 2 auftreffender Kraft, da die beiden komplementär zueinander ausgebildeten Schichtflächen, neben der bereits eine ausreichende Verbindung gewährleistenden Mikroverzahnung, ein Verschieben der Schichten zueinander und damit ein Lösen der Verbindung verhindern.

Neben dem im Ausführungsbeispiel beschriebenen Komponentensystem Polyurethan/Polyethylen können selbstverständlich auch andere nicht selbständig oder mittels eines Klebers miteinander verbindbare Komponentensysteme auf diese Weise miteinander verbunden werden, was natürlich auch für entsprechende mittels Kleber verbindbare Komponentensysteme gilt, wobei in diesem Fall der Kleber eingespart werden kann.

## Patentansprüche

1. Mehrschichtiger Bodenbelag, insbesondere Fallschutzbelag, in Sandwichbauweise für Sport- und Spielplätze, dadurch gekennzeichnet, daß die obere Schicht (2) eine klebergebundene Schicht aus granularem und/oder feinkörnigem Natur- und/oder Synthesekautschuk (4) und die untere Schicht (3) eine geschäumte Polymerschicht ist, die durch eine mechanische Verzahnung zwischen dem nach dem Verbinden der Schichten (2, 3) ausgehärteten Kleber (13) und der Oberflächenstruktur (12) der geschäumten Polymerschicht (3) miteinander verbunden sind.

2. Bodenbelag nach Anspruch 1, dadurch gekennzeichnet, daß die untere Schicht (3) aus miteinander verbundenen geschäumten Polymerschnitzeln (5), vorzugsweise in Mattenform, besteht.

3. Bodenbelag nach Anspruch 1 oder 2, dadurch gekennzeichnet, daß die Oberseite der unteren Schicht zur Vergrößerung der Oberfläche profiliert ist (7, 8).

4. Bodenbelag nach einem der vorangehenden Ansprüche, dadurch gekennzeichnet, daß das Polymer der unteren Schicht (3) Polyethylen ist.

5. Bodenbelag nach einem der vorangehenden Ansprüche, dadurch gekennzeichnet, daß der Kleber Polyurethan ist.

6. Bodenbelag nach einem der vorangehenden Ansprüche, dadurch gekennzeichnet, daß der granulare und/oder feinkörnige, vorzugsweise mehlige Kautschuk ein Recyclingmaterial, insbesondere Altreifenmaterial ist.

7. Bodenbelag nach einem der vorangehenden Ansprüche, dadurch gekennzeichnet, daß die obere Schicht (2) aus granularem und/oder feinkörnigem EPDM-Kautschuk besteht.

8. Bodenbelag nach einem der vorangehenden Ansprüche, dadurch gekennzeichnet, daß die untere Polymerschicht vorgefertigt ist und die obere Schicht am Einbauort des Bodenbelages aufgebracht ist.

9. Verfahren zur Herstellung eines mehrschichtigen Bodenbelages nach einem der vorangehenden Ansprüche, bei dem eine Mischung aus einem Kleber, vorzugsweise Polyurethan und einem granularen und/oder feinkörnigen Kautschukmaterial im wenigstens noch zähflüssigen Zustand des Klebers auf eine Schicht aus einem geschäumten Polymer, vorzugsweise Polyethylen aufgetragen wird, wonach der Kleber unter Erwirkung einer mechanischen Materialverzahnung mit der Oberflächenstruktur der Polymerschicht aushärtet.

10. Verfahren nach Anspruch 9, dadurch gekennzeichnet, daß als Polymerschicht eine aus miteinander verbundenen geschäumten Schnitzeln bestehende, vorzugsweise oberseitig profilierte Matte verwendet wird.

11. Verfahren nach Anspruch 9 oder 10, dadurch gekennzeichnet, daß die untere Polymerschicht als Matte am Einbauort ausgelegt wird und die obere Schicht erste vor Ort aufgebracht wird.
